Europäisches Patentamt

(19) European Patent Office

Office européen des brevets

(11) Numéro de publication: **0 233 826**
**B1**

(12) FASCICULE DE BREVET EUROPEEN

(45) Date de publication du fascicule du brevet: **25.04.90**

(51) Int. Cl.⁵: **D 06 F 58/20,** F 28 B 9/08, F 26 B 21/08

(21) Numéro de dépôt: **87420025.6**

(22) Date de dépôt: **27.01.87**

(54) **Procédé et dispositif permettant de récupérer la chaleur sur des installations rejetant de l'air chaud chargé de vapeur et d'accroître la productivité de ces installations.**

(30) Priorité: **28.01.86 FR 8601326**

(43) Date de publication de la demande:
**26.08.87 Bulletin 87/35**

(45) Mention de la délivrance du brevet:
**25.04.90 Bulletin 90/17**

(84) Etats contractants désignés:
**BE CH DE ES GB IT LI NL SE**

(56) Documents cités:
**WO-A-83/01996**
**CH-A- 444 202**
**DE-A-3 122 571**
**GB-A- 634 917**
**US-A-2 350 936**

(73) Titulaire: **Gerbaud, Pierre**
**Les Hauts du Lac Lathuille**
**F-74210 Favèrges (FR)**

(72) Inventeur: **Gerbaud, Pierre**
**Les Hauts du Lac Lathuille**
**F-74210 Favèrges (FR)**

(74) Mandataire: **Laurent, Michel et al**
**Cabinet LAURENT et GUERRE B.P. 32**
**F-69131 Ecully Cedex (FR)**

Courier Press, Leamington Spa, England.

EP 0 233 826 B1

## Description

La présente invention concerne un procédé de récupération pratiquement totale de la chaleur contenue par un mélange d'air chaud et de vapeur rejeté par des installations et plus particulièrement des installations de séchage; elle concerne également un dispositif permettant la mise en oeuvre du dit procédé.

Dans la suite de la description, l'invention sera plus particulièrement décrite dans le cas d'installations utilisées pour le séchage d'articles textiles, notamment une installation de séchage et de séchage-repassage, ces installations rejetant des quantités importantes d'air chaud chargées de vapeur d'eau, mais il est évident que cela n'est pas limitatif et que le procédé selon l'invention pourrait être mis en oeuvre dans d'autres domaines techniques où se posent des problèmes similaires.

Dans le domaine de blanchissage d'articles textiles, la chaleur utilisée pour les opérations de séchage ou de séchage-repassage, déduction faite des pertes par rayonnement des installations, est contenue en totalité dans le mélange d'air chaud et de vapeur d'eau rejeté par les installations utilisées pour de telles opérations.

A ce jour, et dans le meilleur des cas, ce mélange d'air chaud et de vapeur est rejeté dans l'atmosphère, ce qui entraîne un gaspillage important d'énergie.

Afin de récupérer une partie de cette énergie, il a été proposé de faire passer les conduits d'évacuation du mélange rejeté, sous tube, à l'intérieur de l'installation, par exemple, dans le cas d'une sécheuse-repasseuse, à l'intérieur d'une hotte disposée au dessus des cylindres de repassage et d'aspiration d'air frais et sec que comporte une telle installation.

Une telle solution ne donne cependant pas satisfaction et n'abaisse pratiquement pas la consommation d'énergie.

Il a également été proposé de faire passer cet air chaud chargé de vapeur d'eau à travers un échangeur condenseur pour produire de l'eau chaude; mais les températures d'eau chaude obtenues restent basses (de l'ordre de 40°C) et la part d'énergie économisée très réduite.

Comme solution antérieure proposée pour récupérer de la chaleur contenue dans un mélange d'air et de vapeur rejeté par un appareil produisant ce mélange, on peut citer celle faisant l'objet du brevet DE—A—3 122 571 qui fait appel à la technique bien connue des "laveurs" selon laquelle on réalise "l'arrosage" du mélange d'air chaud et de vapeur. Selon cette technique, le fluide réchauffé par "arrosage", sur deux ou plusieurs étages, est finalement récupéré par gravité, mélangé avec les condensats, à la base de l'échangeur, et à une température moyenne peu élevée mais en quantité importante, soit sous la forme d'énergie dégradée.

Par suite, une telle solution ne donne pas satisfaction.

Or on trouvé et c'est ce qui fait l'objet de la présente invention, un procédé perfectionné qui permet de récupérer la totalité de la chaleur consommée par de tels appareils de séchage, déduction faite de la chaleur perdue par rayonnement, soit la totalité de la chaleur contenue par le mélange d'air et de vapeur chaud rejeté par ces appareils.

Par ailleurs, le procédé selon l'invention permet en outre la récupération séparée des condensats de la vapeur du mélange air/vapeur, à température élevée permettant de les utiliser éventuellement pour un usage distinct compte-tenu de leur pureté (TH = O). Le procédé selon l'invention permet en outre une parfaite régulation des débit et température des fluides réchauffés en fonction de leur utilisation.

D'une manière générale, l'invention concerne donc un procédé permettant de récupérer la totalité de la chaleur (hors pertes par rayonnement) contenue par le mélange d'air et de vapeur, d'une température supérieure à celle d'un fluide secondaire à réchauffer, rejeté par une installation produisant ce mélange d'air chaud et de vapeur, qui consiste à faire passer ledit mélange à l'intérieur d'un échangeur tubulaire à groupes de spires de circulation du fluide à réchauffer et étant caractérisé en ce que:

lors de son passage à l'intérieur de l'échangeur le mélange d'air et de vapeur est maintenu à une pression maximum, supérieure à la pression atmosphérique ambiante, par le moyen du ou des ventilateurs d'extraction des installations, la disposition des organes de la chambre d'échange, au moins un volet de réglage de débit d'échappement de l'échangeur de l'air résiduel;

l'on réinjecte en totalité ou partiellement l'air chaud déshydraté résiduel à travers l'appareil de traitement;

l'on provoque l'écoulement lent des condensats de la vapeur du mélange vers la base de l'échangeur, ces condensats pouvant être réutilisés soit du fait de leur nature, soit en raison de la chaleur résiduelle qu'ils contiennent, soit l'une et l'autre de ces caractéristiques ensemble.

Avantageusement, le fluide à réchauffer est dirigé vers au moins deux, sinon plusieurs groupes de spires tubulaires, chaque groupe réchauffant le fluide à des températures et suivant des débits différents pour chacun, pouvant assurer ainsi, si besoin est pour l'utilisation optimale du fluide réchauffé dans l'échangeur, l'alimentation de réseaux d'utilisation distincts dans des conditions de température et de débit optimales du fluide réchauffé.

En d'autres termes, conformément à l'invention:

l'échangeur est conçu pour entraîner une perte de charge suffisante pour la circulation dans son enceinte du mélange d'air et de vapeur augmentant dans cette enceinte la pression du mélange qui est propulsé et comprimé sensiblement de ce fait par le ventilateur d'extraction de l'appareil de séchage;

lors de son passage à travers l'échangeur, le mélange d'air et de vapeur chaud est ainsi maintenu en permanence à une pression supérieure à la pression atmosphérique ambiante alors même que l'appareil de séchage ou divers de ses organes (cylindres des sécheuses-repasseuses) sont maintenus à une pression inférieure à la pression atmosphérique;

en sortie de l'échangeur, l'air chaud résiduel est suffisamment déshydraté pour être réaspiré directement par l'appareil de séchage;

l'échangeur vertical est traversé, de bas en haut par le mélange d'air et de vapeur afin de maintenir le plus longtemps possible les condensats dans l'échangeur afin d'en retirer le maximum de chaleur;

en dépit de la vitesse ascensionnelle élevée du mélange air-vapeur dans l'échangeur, les gouttes de condensats produites sont dirigées lentement vers la base de l'échangeur et les condensats sont évacués à ce niveau;

le fluide réchauffé sort de l'échangeur à une température élevée et peut être ainsi utilisable et procurer d'importantes économies d'énergie.

Selon une forme de mise en oeuvre du procédé selon l'invention, une partie ou la totalité de l'air chaud déshydraté est réintroduite à l'intérieur de l'appareil de séchage et la productivité de l'appareil augmente dans la proportion de la quantité de chaleur ainsi recyclée par rapport à celle utilisée normalement par l'appareil.

Dans le cas où il est nécessaire d'assurer le chauffage du local à l'intérieur duquel est disposé l'appareil, une partie ou la totalité de l'air chaud sec en sortie d'échangeur peut être utilisé à cet usage, l'augmentation de productivité de l'appareil sera alors moins élevée, étant proportionnelle à l'air chaud recyclé sur l'appareil.

Par ailleurs, selon une autre caractéristique du procédé selon l'invention, la déshydratation désirée de l'air chaud en sortie de l'échangeur est assuré par un groupe de spires indépendant des autres groupes, fonctionnant à basse température et permettant ainsi, avec la meilleure précision et le meilleur rendement, la réintroduction permanente de cet air chaud, soit en totalité soit partiellement à l'intérieur de l'appareil de traitement assurant à cet appareil une augmentation de productivité dans le rapport de la quantité de chaleur contenue par cet air chaud recyclé dans l'appareil et celle fournie à l'appareil dans le même temps, la quantité d'air chaud non réintroduite dans l'appareil pouvant être réglée pour assurer le chauffage du local ou dirigée sur un autre appareil.

Pour la mise en oeuvre du procédé précité, on utilisera un nouveau type d'échangeur qui fait également partie de l'invention.

Cet échangeur est du type tubulaire à spires et à circulation d'eau et il se caractérise en ce que:

il comporte une enceinte cylindrique dans laquelle débouche à sa partie inférieure un conduit d'admission d'air chaud chargé de vapeur et à sa partie supérieure un conduit de sortie d'air chaud suffisamment débarrassé de vapeur;

une colonne centrale s'étendant sur une hauteur majoritaire de l'enceinte précitée, cette colonne, fermée à sa partie supérieure, présentant des perforations et permettant la récupération des condensats par gravité, à travers le tube débouchant sur l'orifice pratiqué au fond de l'enceinte à l'intérieur de la colonne;

l'espace entre l'enceinte et la colonne centrale définit une chambre à l'intérieur de laquelle sont disposés des tubes de circulation d'un fluide à réchauffer entre lesquels circule l'air chaud chargé de vapeur, ladite chambre et son contenu étant conçus pour maintenir en tous ses points le mélange d'air chaud et de vapeur circulant dans cette chambre à une pression le plus possible constante et supérieure à la pression atmosphérique ambiante.

Si l'échangeur, conforme à l'invention, peut comporter un seul circuit de circulation d'eau, selon un mode de réalisation préférentiel, le dit échangeur comportera avantageusement deux ou plusieurs circuits séparés et superposés permettant d'obtenir à leur sortie des températures de fluide réchauffé différentes, le circuit le plus bas permettant d'obtenir des températures de sortie de fluide les plus élevées, le circuit le plus haut produisant le fluide à la température la moins élevée afin de maintenir au sommet de l'échangeur une température suffisamment basse pour provoquer au maximum la condensation de la vapeur contenue dans le mélange air vapeur dont l'échangeur est alimenté en énergie.

Conformément à l'invention, le maintien sous pression du mélange air vapeur dans la chambre de l'échangeur par le ventilateur d'extraction de l'appareil de séchage est obtenu en enroulant le (ou les) tube(s) de circulation d'eau sous la forme de spirales empilées par couches étagées en série, chaque étage pouvant être séparé par un intervalle égal au diamètre du tube de liaison entre les dits étages, la surface libre entre les spires d'une même couche, à travers laquelle circule le mélange air vapeur, étant inférieure ou égale à la section d'entrée de ce mélange dans l'échangeur, cette surface de circulation pouvant avantageusement être réduite à chaque étage de spire par rapport à l'étage immédiatement inférieur afin de maintenir le maximum de pression du mélange air vapeur à travers l'échangeur au fur et à mesure de la condensation de la vapeur.

Par ailleurs, les spires de chaque étage seront décalées d'un étage à l'autre afin de permettre un maximum d'échange thermique en augmentant la convection et les turbulences.

L'évacuation obligatoire des condensats vers la base de l'échangeur à travers la colonne centrale, en raison de la vitesse élevée de passage du mélange d'air et de vapeur à travers les spires qui entraînent les gouttes de condensats au sommet des tubes formant les spires, n'est possible que si chaque étage de spires est disposé suivant une surface conique formant un angle assez prononcé avec un plan horizontal, le sommet de la spirale conique de chaque étage de tubes étant dirigé vers le bas et la spire centrale de chaque étage étant en contact tangentiel avec la surface extérieure de la colonne centrale, elle-même perfor- mée de petits trous au dessus et suivant cette ligne de tangence, les gouttes de condensats descendent ainsi par gravité et à la vitesse désirée suivant l'angle du cone, suivant la ligne en spirale conique de la partie supérieure de chaque étage jusqu'à la spire centrale d'où elles passent par gravité, à travers les trous décrits ci-avant, à l'intérieur de la colonne centrale à travers laquelle elles rejoignent par gravité la base de l'échangeur et l'orifice d'évacuation des condensats, aucun mouvement appréciable du mélange d'air et de vapeur ne pouvant se produire à l'intérieur de l'enceinte de la dite colonne.

Pour les condensats pouvant se former à la base de la chambre de l'échangeur, entre son enceinte et la colonne centrale, la base de cette colonne comprend sur sa périphérie une ou plusieurs petites perforations, de sections insuffisantes pour créer une vitesse ascensionnelle du mélange d'air et de vapeur dans la colonne, mais suffisantes pour éliminer ces rares condensats possibles en leur permettant de pénétrer dans la colonne centrale pour rejoindre l'orifice d'évacuation des condensats.

Enfin, chaque circuit de fluide à réchauffer est équipé avant son entrée dans l'échangeur d'une vanne automatique ou manuelle et à sa sortie d'un système de régulation thermostatique de la température du fluide réchauffé par contrôle permanent de la température d'un circuit de fuite à débit réglable en parallèle avec celui d'échappement du fluide à température contrôlé par le thermostat.

L'invention et les avantages qu'elle apporte seront mieux compris grâce aux exemples de réalisation donnés ci-après à titre indicatif mais non limitatif et qui sont illustrés par les schémas annexés dans lesquels:

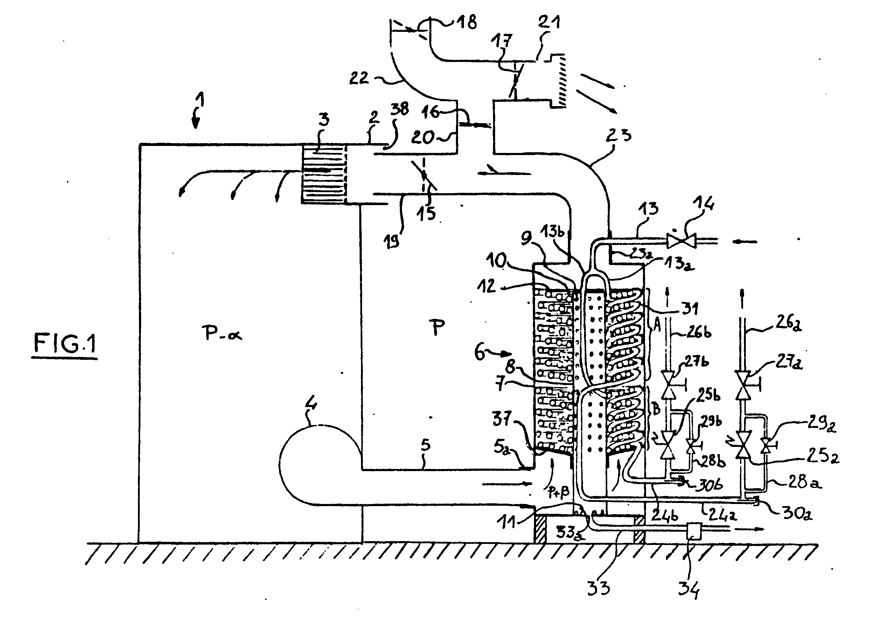

la figure 1 est une vue schématique, en coupe, montrant plus en détail la structure et le fonctionnement d'un échangeur de chaleur permettant la mise en oeuvre du procédé selon l'invention;

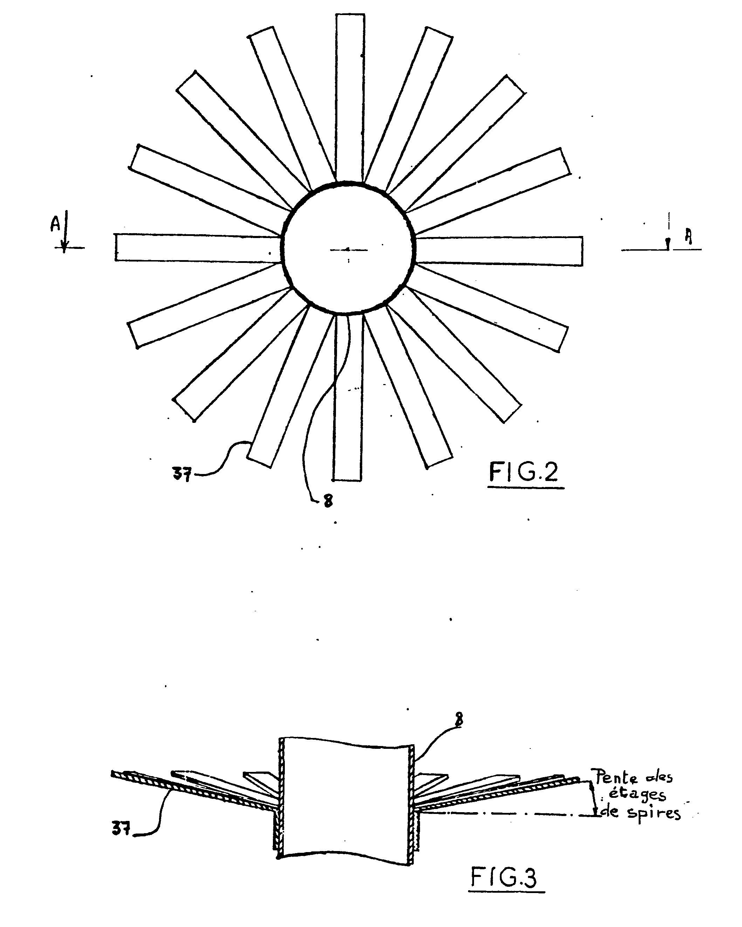

les figures 2 et 3 sont des vues de détail d'un support déflecteur que comporte un échangeur conforme à l'invention pour assurer le montage des étages de spires suivant l'angle de leur montage conique choisi, ainsi que la meilleure répartition du mélange d'air chaud et de vapeur lors de son introduction dans la chambre d'échange;

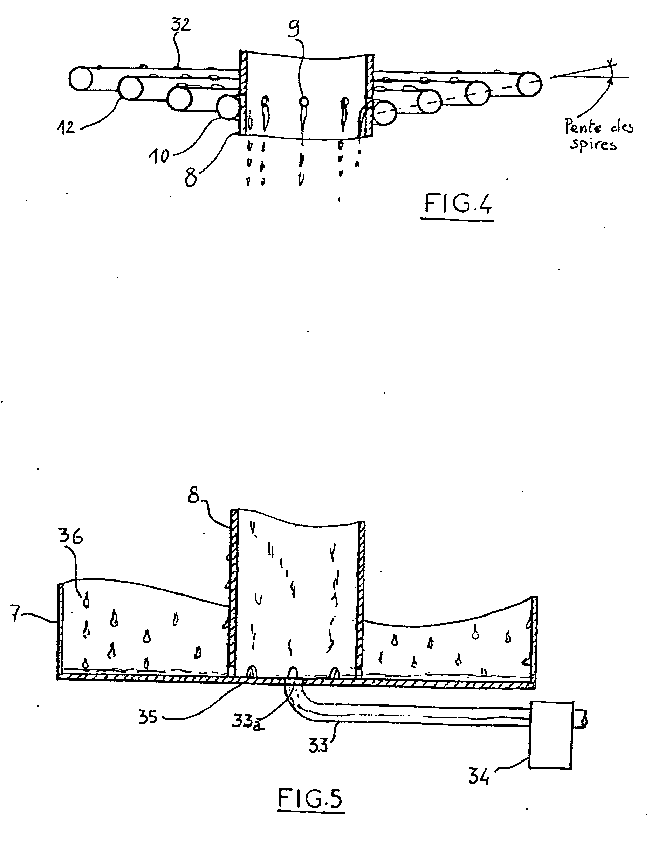

la figure 4 est la vue schématique en coupe, suivant son diamètre, d'un étage de spires monté sur la colonne centrale perforée que comporte un échangeur conforme à l'invention pour assurer la descente des condensats vers la colonne centrale et la descente des condensats vers la base de cette colonne;

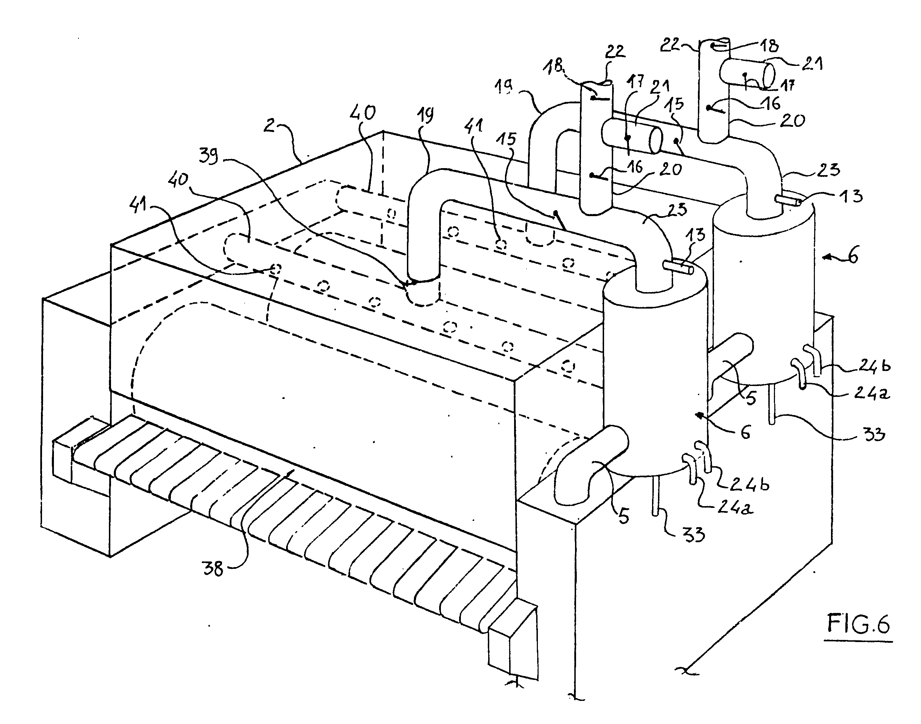

la figure 5 est la vue schématique en coupe de la partie inférieure de l'échangeur, virole, colonne centrale munie d'ouvertures à sa base, fond de l'échangeur, tube d'évacuation des condensats que comporte un échangeur conforme à l'invention pour assurer l'élimination d'une part des condensats drainés à l'intérieur de la colonne centrale, d'autre part de ceux pouvant se former ou se rassembler sous la chambre d'échange entre la colonne centrale et la virole de l'échangeur;

la figure 6 est une vue schématique en perspective d'une sécheuse-repasseuse à deux cylindres équipés chacun d'un échangeur de chaleur conformément à l'invention.

La figure 1 illustre schématiquement un ensemble d'une installation mettant en oeuvre le procédé conforme à l'invention et permettant de récupérer la chaleur à la sortie d'un appareil, désigné par la référence générale (1), entraînant la formation d'un mélange d'air et de vapeur chaud tel que par exemple un séchoir à linge.

Dans de tels appareils, le linge humide est soumis à l'action d'un courant d'air chaud. Pour ce faire, l'air froid ambiant est appelé à travers un conduit d'admission (2) et un système de réchauffage (3) par un ventilateur d'extraction (4) qui met l'ensemble interne de l'appareil (1) en dépression et assure la circulation d'air chaud à travers la matière textile à sécher (non représentée à la figure 1) qu'il sèche progressivement en se chargeant de vapeur pour être évacué par le ventilateur (4) en (5).

Dans les installations conventionnelles utilisées à ce jour, l'air chaud chargé de vapeur d'eau (qui contient toute l'énergie thermique absorbée par l'appareil moins les pertes par rayonnement) est en général rejeté simplement à l'extérieur, ce qui entraîne un gaspillage important d'énergie tant du fait de la masse de vapeur rejetée, identique à la masse d'eau évaporée que de celui de l'importante masse d'air chaud également rejetée. Dans certains cas, il a été envisagé de récupérer très partiellement cette énergie de rejet mais, à ce jour, les solutions proposées ne permettent au mieux que d'obtenir de l'eau chaude à une température de l'ordre de 40°C.

Le procédé conforme à l'invention permet de récupérer pratiquement la totalité de l'énergie rejetée par l'appareil (1) soit la totalité de l'énergie qu'il consomme, déduction faite de l'énergie perdue par rayonnement.

Un tel résultat est obtenu, conformément à l'invention, en raccordant avec le maximum d'étanchéité possible la conduite (5) d'évacuation du mélange d'air chaud et de vapeur à un échangeur de chaleur (6) dont la structure et le fonctionnement seront vus plus en détail dans la suite de la description mais qui, conformément à l'invention, permet de maintenir le mélange d'air et de vapeur chaud circulant à l'intérieur de cet échangeur à une pression $P + \beta$ le plus possible supérieur à la pression atmosphérique ambiante $P$.

Selon un mode préférentiel à l'invention, s'il peut être envisagé d'utiliser tous types d'échangeur qui devront cependant être adaptés pour permettre d'obtenir la surpression, la déshydratation maximum du mélange d'air et de vapeur traité et l'élimination des condensats, on utilisera de préférence un échangeur tubulaire de type nouveau, qui fait également l'objet de la présente invention.

Un tel échangeur tubulaire est constitué, ainsi que cela ressort de la figure 1 annexée, d'une enceinte cylindrique (7) comportant à sa partie inférieure un conduit d'admission (5a) relié de façon parfaitement étanche au conduit de sortie (5) disposé en aval du ventilateur (4) et qui, de ce fait, permet donc d'introduire l'air chaud chargé de vapeur à l'intérieur de l'enceinte (7).

A l'intérieur de cette enceinte (7) est disposée une colonne centrale (8) qui s'étend sur une partie majoritaire de la hauteur de l'enceinte (7) de l'échangeur.

Cette colonne (8) est dotée de perforations (9) aménagées sur sa périphérie tangentiellement aux spires centrales (10) de chaque étage de spires dans lesquelles circule le fluide à réchauffer par l'échangeur; cette même colonne (8) est également dotée à sa base de perforations (11).

L'espace compris entre l'enceinte (7) et la colonne (8) définit une chambre à l'intérieur de laquelle circule, de bas en haut, le mélange d'air chaud et de vapeur provenant de l'installation (1).

L'échange thermique le meilleur est obtenu en faisant passer cet air chaud chargé de vapeur entre les spires (12) d'un serpentin tubulaire à l'intérieur duquel circule à contre courant (de haut en bas) un fluide (eau par exemple) qui est réchauffé par échange thermique.

L'arrivée de ce fluide est assurée par le tube (13) et la vanne de commande (14). L'échangeur conforme à l'invention est conçu de manière à maintenir à l'intérieur de la chambre d'échange une pression P + β supérieure à la pression atmosphérique ambiante et très supérieure à la pression P − α créée à l'intérieur de l'appareil (1) par l'aspiration du ventilateur (4) et les pertes de charge de cet appareil et de sa batterie de chauffe (3); dans ces conditions, le mélange d'air et de vapeur chaud dans la chambre d'échange de l'échangeur (6) subit une augmentation de température appréciable, par compression permanente dans la chambre d'échange.

Cette compression est provoquée par le ventilateur d'extraction (4), une section totale de circulation du mélange d'air et de vapeur à travers chaque étage de spires (12) inférieure à celle du conduit d'admission (5) et par les volets de réglage de débit d'air (15), (16), (17) et (18) équipant respectivement les conduits de sortie d'air chaud (19), (20), (21) et (22) reliés au conduit de sortie d'air chaud (23) de l'échangeur, lui-même relié à la collerette (23a) de sortie d'air chaud disposée à la partie supérieure de l'échangeur.

Pour permettre la condensation maximum de la vapeur du mélange de vapeur et d'air chaud introduit dans l'échangeur, il est nécessaire que les étages hauts de spires de l'échangeur contiennent un fluide à plus basse température possible; ceci implique donc un débit de fluide à réchauffer important qui ne permettra qu'une faible augmentation de la température de fluide à réchauffer, sauf si pour des raisons propres à l'utilisation de l'appareil (1) ou d'autres raisons de mode opératoire, on désire conserver à l'air chaud sortant de l'échangeur un taux d'humidité résiduelle élevé.

Il est préférable, conformément à un mode préférentiel de l'invention d'avoir plusieurs groupes d'étages de spires superposés dans la chambre d'échange, le groupe le plus haut permettant le réchauffement à moyenne température du fluide circulant dans ses spires, le groupe le plus bas permettant la production d'un fluide à la température la plus haute, voisine de la température du mélange air vapeur comprimé à la base de la chambre d'échange. Sur le schéma représenté sur la figure 1 annexée, figurent deux groupes d'étages de spirs superposés: le groupe supérieur A et le groupe inférieur B.

Le groupe de spires supérieur A est alimenté en fluide froid depuis le tube (13) et par le tube (13a).

Le fluide réchauffé à moyenne température provenant du groupe de spires A est évacué par le tube (24a) mini d'une électrovanne (25a) pour rejoindre le tube de sortie (26a) à travers une vanne de réglage de débit (27a).

Afin d'assurer la régulation de température du fluide à moyenne température provenant du groupe supérieur de spires A, une tubulure (28a) de fuite permanente du fluide est dérivée en amont de la vanne (25a), cette tubulure est équipée, d'une vanne de débit minimum (29a) de façon à permettre le balayage permanent de la sonde du thermostat (30a) commandant l'ouverture ou la fermeture de l'électrovanne (25a) de sortie de fluide à moyenne température.

Le groupe de spires inférieur B assurant la production de fluide à haute température fonctionne identiquement au groupe de spires supérieur comme n'importe quel autre groupe le cas échéant.

Pour ce groupe B, la numérotation de référence indiquée pour tous les organes de ce circuit, sur la figure n° 1 annexée, est la même que pour le groupe A mais elle est suivie de la lettre *b*, c'est-à-dire qu'elle comprend dans l'ordre la numérotation suivante: (13b), (24b), (25b), (26b), (27b), (28b), (29b), (30b), le fluide réchauffé à travers ce groupe de spires inférieur B se trouve porté à une température voisine de la température ambiante à la base de la chambre d'échange.

Chaque étage de spires d'un ou des groupes de serpentins de l'échangeur conforme à l'invention est conçu suivant la figure 4 ci-annexée et comprend un tube (12) enroulé en spirale conique dont la spire centrale (10) est maintenue en contact tangentiel circulaire avec la surface externe de la colonne (8).

La base de cône ainsi formé par chaque étage de spires est située à la partie haute de l'étage et le sommet du cône dirigé vers le bas.

La surface totale par étage de spires ainsi formé entre la virole (7) de l'échangeur, les tubes (12) de chaque étage et la colonne (8) est, suivant l'invention, inférieure à la section du tube d'alimentation (5) de l'échangeur en air chaud chargé de vapeur, ceci pour maintenir la pression P + β du mélange d'air et de vapeur chaud pendant sa circulation ascendante à travers les étages de spires.

Suivant un mode préférentiel à l'invention, cette surface de passage de l'air chargé de vapeur à travers les spires pourra utilement aller en décroissant d'étage en étage et de bas en haut pour conserver la pression P + β au mélange d'air et de vapeur à son passage entre chaque étage de spires afin de compenser en permanence la perte de volume du mélange (d'air et de vapeur) entraînée par la condensation d'une partie de la vapeur sur la surface externe des spires à son passage à travers chaque étage.

Chaque étage de spires d'un même groupe (groupe A et groupe B suivant la figure 1 qui ne comprend que deux groupes), est monté suivant un espace conique parallèle à l'espace identique à celui de l'étage immédiatement inférieur ou supérieur. L'espace entre deux étages de spires a une haute égale au diamètre extérieur du tube utilisé pour la réalisation de chaque groupe de spires afin de permettre, comme précisé sur la figure 1, la liaison en série de chaque étage de spires d'un même groupe par le tube (31), de section identique à celui utilisé pour la confection des spires afin d'assurer la circulation du fluide à réchauffer d'un étage de spires à l'étage inférieur pour chaque groupe de spires, mais il est également possible, suivant la technique de fabrication utilisée pour les spires, de diminuer au maximum la distance verticale entre chaque étage de spires en positionnant le tube (31), non pas de la spire de plus grand développement de l'étage supérieur à la spire de plus petit développement de l'étage inférieur mais en utilisant le tube (31) pour relier les spires de plus grand développement de chaque étage.

Afin de provoquer les meilleures conditions d'échange thermique sur la surface des spires de chaque groupe, les spires de chaque étage voisin seront de préférence montées en quinconce, régulièrement, les étages de rang pair ayant une disposition sensiblement identique entre eux, ceux de rang impair une disposition également identique entre eux, cette disposition assurant un meilleur balayage par le mélange air vapeur de la surface d'échange et la formation de turbulences dans le mélange d'air et de vapeur permettant le meilleur échange thermique.

Dans la chambre d'échange d'un échangeur suivant l'invention, la vitesse ascensionnelle du mélange d'air et de vapeur chaud dépasse la vitesse limite de chute des gouttes de condensats par gravité vers le bas de l'échangeur.

Il semblerait donc plus simple, comme c'est le cas pour d'autres échangeurs, de faire circuler le mélange d'air et vapeur chaud de haut en bas pour entraîner ainsi facilement les condensats formés vers une purge de condensats située à la base de l'échangeur; mais dans ce cas, les condensats éliminés ainsi rapidement à une température élevée ne céderaient que très peu de l'énergie qu'ils contiennent au fluide à réchauffer circulant dans les groupes de spires.

La disposition inverse, conforme à l'invention, permet au contraire d'assurer par le parcours des condensats le plus long possible sur chaque étage de spires, le maximum de temps de contact de ces condensats avec les spires du fluide à réchauffer, donc le plus grand échange thermique, ainsi que l'élimination des condensats contenant le minimum d'énergie résiduelle à travers la colonne centrale.

Ainsi que le montre la figure 4, qui représente en coupe un étage de spires, les gouttes de condensats (32) qui se forment sur la surface des spires (12) sont entraînées par la circulation ascendante rapide de l'air chaud chargé de vapeur suivant la ligne de points les plus hauts de chaque étage de spires, ligne formant une spirale descendante, non soumise au courant d'air ascendant, qui dirige ces gouttes lentement par gravité suivant la pente de la spirale jusqu'aux orifices (9) pratiqués à travers l'enveloppe de la colonne centrale (8) immédiatement au dessus de la ligne de contact circulaire de tangence entre la spire centrale (10) de l'étage de spires et la colonne centrale (8), les dits orifices permettant aux condensats de s'écouler par gravité à travers l'espace intérieur de la colonne (8), colonne qui est obturée à sa partie supérieure pour empêcher tout déplacement ascendant important du mélange d'air et de vapeur dans son espace intérieur.

Les condensats provenant des échanges thermiques par condensation de la vapeur sur les spires rejoignent ainsi la base de la colonne centrale et la partie centrale du fond de l'échangeur qui présente une perforation (33a) débouchant sur le tube (33) d'évacuation des condensats qui peut, si besoin est, être reliée au filtre (34) pour débarrasser ces condensats d'impuretés éventuelles dans le cas où leur énergie thermique résiduelle les rend directement réutilisables.

Par ailleurs, les pertes thermiques par rayonnement pouvant entraîner la formation de condensats dans la partie interne basse de l'échangeur immédiatement sous la chambre d'échange, comme le montre la figure 5, qui est une coupe de cette partie basse de l'échangeur, l'enveloppe de la colonne centrale (8) est munie de quelques petits orifices (35) le long et au dessus de sa ligne circulaire d'assemblage avec le fond de l'échangeur, ainsi les gouttes de condensats (36), pouvant se former dans l'enceinte de l'échangeur sous la chambre d'échange, descendent par gravité à la base de l'échangeur et rejoignent les condensats collectés par la colonne centrale à travers les orifices (35) pour être évacués avec eux par l'orifice inférieur (33a) et le tube (33).

Afin de supporter et d'orienter convenablement à la construction les différents étages de spires situés dans la chambre d'échange, des supports (37) sont disposés en étoile immédiatement sous l'étage de spires le plus bas de l'échangeur.

Les figures 2 et 3 qui sont une vue en plan et en coupe de l'ensemble des supports (37) d'un échangeur montrent que ces supports sont assemblés en étoile suivant la périphérie de la colonne centrale (8) et qu'ils forment avec un plan perpendiculaire à l'axe central vertical de l'échangeur un angle identique à celui nécessaire entre la figure conique des étages de spires et un même plan.

La disposition en étoile des supports (37) immédiatement à l'entrée du mélange d'air et de vapeur chaud dans la chambre d'échange permet en outre, en donnant les profils et largeurs nécessaires aux supports (37), d'assurer une répartition optimale de la circulation d'air chaud chargé de vapeur à travers les étages de spires de la chambre d'échange. La figure 2 n'est donc qu'un dessin schématique pour ce qui concerne la géométrie et l'importance des supports (37).

Conformément à l'invention, l'air chaud sortant de l'échangeur par le manchon (23a) et le tube (23) pourra être soit pratiquement déshydraté, soit d'un degré d'humidité voisin de celui de l'air ambiant.

Ainsi que le montre la figure 1, si le volet (16) obture le tube (2) et que le volet (15) est ouvert ou suffisamment ouvert pour maintenir la pression P + β désirée dans la chambre d'échange, la même quantité d'air chaud sec va sortir à l'extrémité du tube (19) que celle aspirée par l'appareil (1), grâce à sa mise en dépression P − α par le ventilateur (4) à travers le tube d'entrée (2) et le dispositif de chauffage (3). L'air servant au transport de la chaleur produite par le dispositif de chauffage (3) se trouve ainsi en permanence directement recyclé chaud sur l'appareil lui-même d'où, à consommation d'énergie égale par le dispositif de chauffage (3), une augmentation importante de la productivité de l'appareil (1), proportionnelle à la masse d'air recyclé et à la température de cet air par rapport à l'énergie consommée par le dispositif de chauffage (3).

Si par contre, on ne désire pas augmenter la productivité de l'appareil (1), il suffira de réduire l'énergie thermique produite par le dispositif de chauffage (3) d'une quantité d'énergie égale à celle procurée par le recyclage de l'air chaud provenant de l'échangeur sur l'appareil (1).

Il convient par ailleurs de remarquer que la masse d'air chaud rejetée par l'échangeur (6) étant en permanence égale à celle absorbée par l'appareil (1), il n'est pas utile d'effectuer un raccordement étanche entre le tube de sortie (19) et le tube d'admission (2), ainsi que le montre la figure 1.

Au contraire, l'espace libre (38) entre le tube de sortie d'air chaud (19) et le tube d'admission (2) doit être suffisamment important pour permettre le fonctionnement de l'appareil (1) et de l'échangeur (6) suivant les autres modes opératoires ci-après:

en cas de besoin de chauffage du local, le volet (15) peut être fermé un peu plus que le réglage décrit ci-avant ou totalement fermé, dans ce cas le volet (16) peut être ouvert totalement et le volet (17) partiellement ou totalement ouvert, le volet (18) restant fermé; il est alors possible d'utiliser l'air chaud sec produit par l'échangeur, partiellement ou en totalité, pour le chauffage du local et dans ce cas l'air frais d'appoint nécessaire à l'appareil (1) est aspiré par l'espace (38);

de la même façon que décrit ci-avant, l'air chaud sortant de l'échangeur (6) pourra être dirigé si besoin est sur un autre appareil dont les besoins en air chaud seraient prioritaires;

en cas de défaillance quelconque de l'échangeur (6), l'appareil (1) peut cependant continuer à fonctionner avec sa consommation d'énergie d'origine, sans économie, en mettant en position fermée les volets (15) et (17) et en position ouverte les volets (16) et (18), la sortie du tube (22) sera dans ce cas relié par un tube approprié pour assurer, de façon classique et habituelle actuellement, l'évacuation de l'air chaud chargé de vapeur à l'extérieur du local. Dans ce cas encore, l'espace (38) fournira l'air frais à l'appareil (1).

Conformément à l'invention, on peut constater que l'énergie consommée par l'appareil (1) est partiellement recyclée sur l'appareil lui-même sous forme d'air chaud sec permettant soit d'augmenter sa productivité ou de diminuer sa consommation en énergie thermique en fonction de la masse d'air recyclé; l'autre partie d'énergie thermique mise en oeuvre (déduction faite des pertes par rayonnement des installations et de l'énergie contenue par les condensats), est utilisée pour le chauffage d'un fluide (eau par exemple), à température unique ou à plusieurs gammes de température (en général deux) dont une voisine de la température de la chambre d'échange; le reste de l'énergie est contenue par l'eau chaude fournie par les condensats.

La totalité de l'eau ou des fluides chauds produits par de tels échangeurs est le plus souvent directement utilisable.

L'invention permet donc une économie quasi totale d'une quantité d'énergie équivalente à celle absorbée par l'appareil (1) et une augmentation importante de productivité de cet appareil.

L'invention peut être appliquée pour toutes les installations rejetant un mélange d'air et de vapeur chaud. C'est par exemple le cas d'une sécheuse-repasseuse utilisée pour le séchage du linge plat, appareil qui, de manière connue, comporte d'une part un ou plusieurs cylindres successifs d'entraînement du linge et d'évacuation d'un mélange d'air et de vapeur chaud, chaque cylindre étant doté d'un ventilateur d'extraction, d'autre part une cuvette chauffante fixe par cylindre assurant le séchage et le repassage du linge.

Ainsi, la figure 6 représente le schéma en perspective d'une sécheuse-repasseuse à deux cylindres équipés chacun d'échangeurs (6) conforme à l'invention et permettant en permanence le recyclage sur la surface aspirante des cylindres (surface non en contact avec les cuvettes) de la masse d'air chaud suffisamment sec sortant de l'échangeur et, hors pertes par rayonnement de l'installation, l'utilisation du reste de l'énergie thermique mise en oeuvre dans les cuvettes pour produire de l'eau chaude à des températures permettant son utilisation directe pour le lavage du linge en particulier.

S'il existe des hottes, généralement transparentes, pour recouvrir la partie supérieure des sécheuses-repasseuses dans le souci de limiter les pertes par rayonnement de tels appareils, de telles hottes ne laissant pour les entrées d'air frais qu'un mince espace (38) nécessaire à l'entrée du linge humide dans l'appareil et un espace identique à l'arrière de l'appareil (non visible sur la figure 6 en perspective) pour permettre la sortie du linge sec, si certaines hottes sont traversées par des tubes à travers lesquels circule le mélange d'air et de vapeur chaud, extrait de l'appareil par ses ventilateurs, avant d'être rejeté à l'extérieur du local, de tels dispositifs n'assurent que de très faibles économies d'énergie thermique (de 2 à 5%).

Sur le schéma de la figure 6, une telle hotte (2) a été conservée et sa surface supérieure munie de deux ouvertures (39) pour permettre le recyclage direct et permanent dans la hotte de l'air chaud suffisamment sec rejeté par les échangeurs (6) à travers les conduits (23), (19), les volets (15) (de réglage de débit d'air et de pression du mélange d'air et de vapeur dans les chambres d'échange des échangeurs), les conduits (40) intérieurs à la hotte, fermés à leurs extrémités mais équipés d'un nombre suffisant de perforations (41) suivant leur longueur afin de diffuser et bien répartir au dessus des cylindres de l'appariel la quantité d'air chaud rejeté par les échangeurs équivalente en permanence à celle aspirée par les dits cylindres pour entraîner la vapeur produite par le séchage du linge et renvoyer le mélange d'air et vapeur ainsi formé par les ventilateurs d'extraction de chaque cylindre à travers les conduits (5) jusqu'aux échangeurs (6) qui réchauffent l'eau froide introduite en permanence par le tube (13) dans les étages des spires supérieurs A et inférieurs B des échangeurs (6), les tubes (24a) des échangeurs étant ceux de sortie d'eau à moyenne température, les tubes (24b) ceux de sortie d'eau à haute température, les tubes (33) servant à l'écoulement de l'eau chaude des condensats provenant de la condensation de la vapeur d'eau de séchage du linge, de tels condenseurs permettant en quasi totalité la récupération de l'énergie thermique fournie à la sécheuse-repasseuse.

Ainsi une sécheuse-repasseuse équipée d'une hotte classique, d'échangeurs conformes à l'invention et des moyens suivant l'invention pour conduire l'air chaud rejeté par les échangeurs directement dans le volume défini par la hotte, a une productivité considérablement élevée par rapport à un appareil équipé d'une simple hotte.

En effet, grâce au procédé suivant l'invention, c'est le même air qui est recyclé en permanence dans le circuit ouvert ainsi établi, ce qui entraîne une augmentation de la température de cet air à chaque rotation de la masse d'air masse d'air totale mise en oeuvre en permanence dans de telles installations, jusqu'à une température limite, fonction de la température des cuvettes et des pertes de l'installation par rayonnement.

De ce fait, les cylindres de la sécheuse-repasseuse aspirent de l'air non plus frais mais d'une température élevée et cet air amène à l'ensemble de l'appareil d'une part une quantité permanente importante d'énergie recyclée, d'autre part entraîne une élévation importante de la température des cylindres et des cuvettes, soit finalement une température différentielle plus élevée entre le linge humide à sécher et repasser et les cuvettes, ces deux facteurs permettant un traitement beaucoup plus rapide du linge et une économie importante d'énergie, de main d'oeuvre et de frais pour une masse de linge donnée à traiter.

Il convient de noter que plus la masse d'air mise en oeuvre par masse de linge à traiter sera grande, et plus la productivité de l'appareil sera augmentée à consommation d'énergie égale.

Enfin et suivant l'invention, la part d'énergie thermique absorbée par l'appareil et non recyclée sur celui-ci par l'air recyclé est entièrement convertie en eau tiède ou chaude directement utilisable et en quantités largement suffisantes pour assurer le lavage d'une masse de linge équivalente à la masse de linge séchée et repassée, ceci avec un apport négligeable d'énergie complémentaire de régulation si besoin est.

Sur le schéma en perspective de la figure 6, les tubes (24a) des échangeurs (6) sont les tubes de sortie d'eau tiède produite par les échangeurs, cette eau tiède, en blanchisserie, sera régulée à une température de 40°C et conduite vers un réservoir de stockage et distribution d'eau à 40°C.

Les tubes (24b) sont les tubes de sortie d'eau chaude produite par les échangeurs, cette eau chaude, en blanchisserie, sera régulée à une température de 65 à 75°C et conduite vers un réservoir de stockage et de distribution d'eau à haute température.

Les tubes (33) sont les tubes d'écoulement des condensats de la vapeur de séchage, soit de l'eau chaude dont le Th = 0, qui peut être utilisée après relevage par une pompe, soit pour l'alimentation en eau chaude d'un générateur de vapeur, soit en complément de l'eau à haute température produite par les échangeurs et rejetée par les tubes (24b).

Dans le cas de l'installation d'échangeurs conformes à l'invention sur tous les appareils de séchage d'une blanchisserie, il apparaît donc finalement que la seule énergie consommée par l'ensemble d'une telle blanchisserie sera celle rejetée par les eaux tièdes ou chaudes du matériel de lavage (énergie récupérable partiellement par pompe à chaleur) et les pertes par rayonnement de l'ensemble des installations.

Enfin, conformément à l'invention et comme exposé précédemment, la figure 6 montre qu'accessoirement le procédé permet:

le chauffage du local par réglage des volets (15), (16) et (17), les volets (18) étant maintenus fermés, l'air chaud sec s'échappant alors suivant le débit souhaité par les conduits (21);

le maintien en fonction, sans économie d'énergie dans ce cas, de la sécheuse-repasseuse en cas de défaillance et de mise hors service momentané d'un échangeur par fermeture des volets (15) et (17), ouverture des volets (16) et (18) et rejet pendant ce temps de l'air chargé de vapeur de la sécheuserepasseuse à l'extérieur du local par le conduit (22), comme pratiqué actuellement avec ce type de matériel.

Il convient en outre de remarquer que, si dans le cas exposé schématiquement ci-avant suivant la figure 6, chaque cylindre, donc chaque ventilateur d'extraction de la sécheuse-repasseuse, est équipé d'un échangeur suivant l'invention, il est possible, suivant le cas d'équiper un tel appareil en reliant par plusieurs conduits (5) chaque ventilateur d'extraction à un échangeur unique calculé à cet effet.

Ainsi, l'invention est applicable non seulement dans le cas où le mélange air vapeur est à température élevée, mais également si la température de ce mélange n'est que légèrement supérieure à celle du fluide à réchauffer à travers l'échangeur.

**Revendications**

1. Procédé permettant de récupérer la totalité de la chaleur (hors pertes par rayonnement) contenue par le mélange d'air et de vapeur, d'une température supérieure à celle d'un fluide secondaire à réchauffer, rejeté par une installation produisant ce mélange d'air chaud et de vapeur, qui consiste à faire passer ledit mélange à l'intérieur d'un échangeur tubulaire à groupes de spires de circulation du fluide à réchauffer, caractérisé en ce que:

lors de son passage à l'intérieur de l'échangeur, le mélange d'air et de vapeur est maintenu à une pression maximum, supérieure à la pression atmosphérique ambiante, par le moyen du ou des ventilateurs d'extraction des installations, la disposition des organes de la chambre d'échange, au moins un volet de réglage de débit d'échappement de l'échangeur de l'air résiduel;

l'on réinjecte en totalité ou partiellement l'air chaud déshydraté résiduel à travers l'appareil de traitement;

l'on provoque l'écoulement lent des condensats de la vapeur du mélange vers la base de l'échangeur, ces condensats pouvant être réutilisés soit du fait de leur nature, soit en raison de la chaleur résiduelle qu'ils contiennent, soit l'une et l'autre de ces caractéristiques ensemble.

2. Procédé selon la revendication 1, caractérisé en ce que le fluide à réchauffer est dirigé vers au moins deux, sinon plusieurs groupes de spires tubulaires, chaque groupe réchauffant le fluide à des températures et suivant des débits différents pour chacun, pouvant assurer ainsi, si besoin est pour l'utilisation optimale du fluide réchauffé dans l'échangeur, l'alimentation de réseaux d'utilisation distincts dans des conditions de température et de débit optimales du fluide réchauffé.

3. Procédé selon l'une des revendications 1 et 2, caractérisé par le fait que la déshydratation désirée de l'air chaud en sortie de l'échangeur est assurée par un groupe de spires indépendant des autres groupes, fonctionnant à basse température et permettant ainsi, avec la meilleure précision et le meilleur rendement, la réintroduction permanente de cet air chaud, soit en totalité soit partiellement à l'intérieur de l'appareil de traitement assurant à cet appareil une augmentation de productivité dans le rapport de la quantité de chaleur contenue par cet air chaud recyclé dans l'appareil et celle fournie à l'appareil dans le même temps, la quantité d'air chaud non réintroduite dans l'appareil pouvant être réglée pour assurer le chauffage du local ou dirigée sur un autre appareil.

4. Echangeur tubulaire à spires et circulation de fluide à réchauffer pour la mise en oeuvre du procédé selon l'une des revendications 1 à 3, caractérisé en ce que:

il comporte une enceinte cylindrique (7) dans laquelle débouche à sa partie inférieure un conduit d'admission (5a) d'air chaud chargé de vapeur et à sa partie supérieure un conduit (23a) de sortie d'air chaud suffisamment débarrassé de vapeur;

une colonne centrale (8) s'étendant sur une hauteur majoritaire de l'enceinte (7) précitée, cette colonne (8), fermée à sa partie supérieure, présentant des perforations (9) et (11) permettant la récupération des condensats par gravité, à travers le tube (33) débouchant sur l'orifice (33a) pratiqué au fond de l'enceinte (7) à l'intérieur de la colonne (8);

l'espace entre l'enceinte (7) et la colonne centrale (8) définit une chambre l'intérieur de laquelle sont disposés des tubes de circulation d'un fluide à réchauffer entre lesquels circule l'air chaud chargé de vapeur, ladite chambre et son contenu étant conçus pour maintenir en tous ses points le mélange d'air chaud et de vapeur circulant dans cette chambre à une pression le plus possible constante et supérieure à la pression atmosphérique ambiante.

5. Echangeur de chaleur selon la revendication 4, caractérisé par le fait que, pour obtenir une élévation de température suffisante du fluide à réchauffer et la condensation maximum de la vapeur entraînée par l'air afin de permettre le recyclage de cet air, il comporte au moins deux circuits de fluide à réchauffer superposés dans la chambre d'échange permettant d'obtenir à leur sortie des températures de fluide réchauffé différentes, la plus élevée se rapprochant de celle de la vapeur comprimée dans la chambre d'échange.

6. Echangeur de chaleur selon l'une des revendications 4 et 5, caractérisé par le fait que le maintien sous pression du mélange d'air et de vapeur à l'intérieur de la chambre est obtenu en enroulant le ou les tubes (12) sous la forme de spirales par couches successives parallèles, la surface libre au niveau de chaque couche entre l'enceinte (7), la colonne (8) et le tube formant la spirale de chaque couche étant inférieure à la surface de la section du conduit d'admission (5a).

7. Echangeur de chaleur selon l'une des revendications 4 à 6, caractérisé par le fait qu'afin d'assurer l'écoulement lent mais continu des condensats à l'intérieur de la colonne centrale (8), en dépit de la grande vitesse ascensionnelle du mélange d'air et de vapeur chaud dans la chambre d'échange, les couches de spires tubulaires successives sont inscrites dans un volume conique de plus grand diamètre à la partie supérieure de chaque couche de spires, la spire centrale (10) de chaque couche étant enroulée tangentiellement à la colonne centrale (8) qui présente les perforations (9) immédiatement au dessus de la ligne de tangence définie ci-avant afin de permettre aux condensats, qui descendent lentement par gravité chaque étage de spires jusqu'à la spire centrale (10), de pénétrer dans la colonne centrale d'évacuation des condensats (8) par les perforations (9), l'angle formé par le cône décrit par chaque couche de spires avec un plan perpendiculaire à la colonne centrale étant déterminé par la vitesse d'écoulement souhaitée pour les condensats.

8. Echangeur de chaleur selon l'une des revendications 4 à 7, caractérisé par le fait que pour obtenir un maintien de la surpression sur toute la hauteur de la chambre d'échange, la surface du passage du mélange air vapeur entre chaque étage de spires est légèrement décroissante du bas en haut des étages de spires afin de compenser à chaque étage la perte de volume du mélange d'air et de vapeur par condensation progressive de la vapeur.

9. Echangeur de chaleur selon l'une des revendications 4 à 8, caractérisé par le fait qu'il comporte, en aval, un conduit de sortie d'air comprenant au moins un volet (15) permettant le réglage éventuel du débit d'air et de la surpression du mélange d'air et de vapeur dans l'enceinte dudit échangeur.

**Patentansprüche**

1. Verfahren zur Rückgewinnung der gesamten, in einem Luft/Dampfgemisch enthaltenen Wärme (außer der Abstrahlungsverluste), das eine Temperatur aufweist, die höher liegt als die Temperatur eines zu erwärmenden sekundären Fluids, und das ferner von einer Einrichtung ausgestoßen wird, die dieses Gemisch an warmer Luft und Dampft erzeugt, bei dem das Gemisch im Innenraum eines rohrförmigen Tauschers an Gruppen von Spiralwindungen mit umlaufenden, zu erwärmenden Fluid vorbeiströmen gelassen wird, dadurch gekennzeichnet,

daß das Luft/Dampfgemisch, währenddessen es in den Innenraum des Tauschers strömt, auf einem Höchstdruck gehalten wird, der über dem atmosphärischen Umgebungsdruck liegt, und zwar mittels eines oder mehrerer Sauglüfter der Einrichtungen, mittels der Anordnung der Organe der Tauscherkammer, sowie mittels zumindest einer Regelklappe für die Ausstoßmenge des Tauschers an Restlauft;

daß die warme, getrocknete Restluft ganz oder teilweise über die Behandlungsapparatur zurückgeführt wird;

daß ein langsames Ablaufen der Kondensate des Dampfes des Gemisches in Richtung Boden des Tauschers hervorgerufen wird, wobei diese Kondensate wieder verwendet werden können, sei es aufgrund ihrer Natur, sei es aufgrund der Restwärme, die sie enthalten, sei es aufgrund beider dieser Eigenschaften.

2. Verfahren nach Anspruch 1, dadurch gekennzeichnet, daß das zu erwärmende Fluid auf zumindest zwei, ansonsten mehrere Gruppen an rohrförmigen Spiralwindungen geleitet wird, wobei jede Gruppe für sich allein das Fluid auf unterschiedliche Temperaturen erwärmt und demzufolge verschiedene Durchflußmengen schafft, wodurch sichergestellt werden kann, daß, falls die optimale Ausnutzung des im Tauscher erwärmten Fluids notwendig ist, die Zufuhr des verwendeten Netzes sich in den jeweils für das erwärmte Fluid optimalen Temperatur- und Durchflußmengenzuständen unterscheidet.

3. Verfahren nach Anspruch 1 oder 2, dadurch gekennzeichnet, daß die erwünschte Trocknung der warmen Luft im Ausgang des Tauschers durch eine Gruppe an Spiralwindungen sichergestellt wird, die unabhängig von den anderen Gruppen ist, die bei niederer Temperatur arbeitet und dadurch mit größter Genauigkeit und mit höchstem Nutzeffekt die andauernde Rückführung dieser warmen Luft in den Innenraum der Behandlungstemperatur ermöglicht, sei es vollständig oder teilweise, wodurch diese Apparatur eine Produktivitätssteigerung im Hinblick auf die Wärmemenge erfährt, die in der der Appartur rückgeführten warmen Luft enthalten ist, und dies ergibt für die Apparatur gleichzeitig die Möglichkeit, die Menge der nicht in die Apparatur zurückgeführten warmen Luft zu steuern, um entweder das Erwärmen des Raumes zu bewerkstelligen oder diese auf eine andere Apparatur zu richten.

4. Rohrförmiger Tauscher mit Spiralwindungen und mit einer Zirkulation eines zu erwärmenden Fluids zur Durchführung des Verfahrens nach einem der Ansprüche 1 bis 3, gekennzeichnet durch

ein zylindrisches Gehäuse (7), von dessen unterem Abschnitt sich eine Zuführleitung (5a) für dampfbeladene warme Luft, und von dessen oberem Bereich sich eine Ausgangsleitung (23a) für in ausreichendem Maße von Dampf befreiter warmer Luft weg erstrecken;

eine mittige Kolonne (8), die sich über einen wesentlichen Teil der Höhe des Gehäuses (7) erstreckt, wobei die an ihrem oberen Bereich geschlossene Kolonne (8) Öffnungen (9) und (11) aufweist, die eine Rückgewinnung der Kondensate unter Schwerkraft durch die Leitung (33) ermöglicht, die sich von der Öffnung (33a) im Boden des Gehäuses (7) im Innern der Kolonne (8) weg erstreckt;

wobei der Raum zwischen dem Gehäuse (7) und der mittigen Kolonne (8) eine Kammer umfaßt, in deren Innenraum Zirkulationsleitungen für ein zu erwärmendes Fluid angeordnet sind, zwischen denen die warme, dampfbeladene Luft zirkuliert, wobei die Kammer und deren Inhalt derart aufgebaut sind, daß das Gemisch an warmer Luft und Dampf an jeder Stelle jeweils bei einem möglichst konstanten Druck strömen kann und über dem atmosphärischen Umgebungsdruck gehalten wird.

5. Wärmetauscher nach Anspruch 4, dadurch gekennzeichnet, daß um eine ausreichende Anhebung der Temperatur des zu erwärmenden Fluids und um ein maximales Kondensieren des von der Luft mitgeführten Dampfes zu erhalten, so daß diese Luft zurückgeführt werden kann, zumindest zwei aufeinander angeordnete Kreisläufe an zu erwärmenden Fluid in der Tauscherkammer angeordnet sind, wodurch an deren Ausgang verschiedene Temperaturen des erwärmten Fluids erhalten werden können, wobei die am meisten angehobene Temperatur sich derjenigen des komprimierten Dampfes in der Tauscherkammer nähert.

6. Wärmetauscher nach Anspruch 4 oder 5, dadurch gekennzeichnet, daß das unter Druckhalten des Luft/Dampfgemisches im Innenraum der Kammer dadurch erhalten wird, daß man ein oder mehrere Rohre (12) in Form von Spiralwindungen in aufeinanderfolgenden parallelen Schichten windet, wobei die freie Durchtrittsfläche, auf Höhe jeder Schicht, zwischen dem Gehäuse (7), der Kolonne (8) und dem Rohr, das die Spiralwindung jeder Schicht bildet, geringer ist als die Querschnittsfläche der Zuführleitung (5a).

7. Wärmetauscher nach einem der Ansprüche 4 bis 6, dadurch gekennzeichnet, daß zur Sicherstellung des langsamen, jedoch kontinuierlichen Ablaufens der Kondensate im Innenraum der mittigen Kolonne (8), trotz der großen Steiggeschwindigkeit des heißen Luft/Dampfgemisches in der Tauscherkammer, die Schichten der aufeinanderfolgenden rohrförmigen Spiralwindungen in einem konischen Volumen einbeschrieben sind, das am oberen Abschnitt jeder Schicht an Spiralwindungen den größten Durchmesser aufweist, wobei die mittige Spiralwindung (10) jeder Schicht tangential um die mittige Kolonne (8) gelegt ist, die unmittelbar über der zuvor erwähnten Tangentiallinie Öffnungen (9) aufweist, damit die Kondensate, die aufgrund der Schwerkraft langsam jede Etage an Spiralwindungen bis zur mittigen Spiralwindung (10) herablaufen, in die mittige Auslaßkolonne (8) für die Kondensate durch die Öffnungen (9) eindringen können, wobei der Winkel zwischen dem durch jede Schicht an Spiralwindungen gebildeten Konus und einer Senkrechten zur mittigen Kolonne durch die gewünschte Ablaufgeschwindigkeit für die Kondensate bestimmt wird.

8. Wärmetauscher nach einem der Ansprüche 4 bis 7, dadurch gekennzeichnet, daß zum Aufrechterhalten des Überdruckes über die gesamte Höhe der Tauscherkammer, die Durchtrittsfläche des Luft-/Dampfgemisches zwischen jeder Etage an Spiralwindungen, von unten nach oben der Etagen an Spiralwindungen gesehen, leicht abnehmend ist, um auf jeder Etage den Volumenverlust des Luft-/Dampfgemisches durch fortschreitende Kondensation des Dampfes auszugleichen.

9. Wärmetauscher nach einem der Ansprüche 4 bis 8, dadurch gekennzeichnet, daß stromabwärts, eine Luftauslaßleitung vorgesehen ist, die zumindest eine Klappe (15) aufweist, die eine Steuerungsmöglichkeit für den Luftausstoß und des Überdruckes in der Luft/Dampfmischung im Gehäuse des Tauschers ermöglicht.

**Claims**

1. Method for the recovery of all the heat (except for losses through radiation) contained by the mixture of air and steam, at a temperture greater than that of an auxiliary fluid to be heated up, emitted by an installation producing this mixture of hot air and steam, which consists in passing the said mixture inside a tubular exchanger having groups of coils for the circulation of the fluids to be heated up, characterized in that:

during its passage inside the exchanger, the mixture of air and steam is maintained at a maximum pressure greater than the ambient atmospheric pressure by means of the extraction fan or fans of the installations, the arrangement of the components of the exchange chamber, and at least one flap for regulating the rate of the escape of the residual air from the exchanger;

all or part of the residual dehydrated hot air is reinjected through the treatment apparatus;

the condensates of the steam of the mixture are caused to run off slowly towards the base of the exchanger, it being possible for these condensates to be reused either because of their nature or owing to the residual heat which they contain, or a combination of these features.

2. Method according to Claim 1, characterized in that the fluid to be heated up is directed towards at least two, if not several groups of tube coils, each group heating the fluid up to temperatures, and at rates, which differ from each other, it thus being possible to ensure, if it is necessary for the optimum use of the fluid heated up in the exchanger, the supply of different use networks in temperature and rate conditions which are optimum for the fluid heated up.

3. Method according to either of Claims 1 or 2, characterized in that the desired dehydration of the hot air issuing from the exchanger is ensured by a group of coils independent from the other groups, operating at a low temperature and thus enabling, with the highest degree of accuracy and the highest yield, this hot air to be permanently reintroduced, either entirely or partially, inside the treatment apparatus, ensuring an improvement in productivity for this apparatus in the ratio between the quantity of heat contained by this hot air recycled in the apparatus and that supplied to the apparatus within the same time, it being possible for the quantity of hot air which is not reintroduced into the apparatus to be regulated so as to ensure the heating of the premises or to be directed to another apparatus.

4. Tubular exchanger having coils and circulation of the fluid to be heated up, for the implementation of the method according to one of Claims 1 to 3, characterized in that:

it has a cylindrical enclosure (7) into the lower part of which opens a conduit (5a) for the admission of steam-laden hot air and into the upper part of which opens a conduit (23a) for the outlet of hot air which has been sufficiently relieved of steam;

a central column (8) extending over the majority of the height of the abovementioned enclosure (7), this column (8), closed at its upper part, having perforations (9) and (11) which enable the condensate to be recovered by gravity, through the pipe (33) which opens out at the orifice (33a) made in the base of the enclosure (7) inside the column (8);

the space between the enclosure (7) and the central column (8) defines a chamber inside which are arranged tubes for the circulation of a fluid to be heated up, between which tubes circulates the steam-laden hot air, the said chamber and its contents being designed so as to maintain throughout it the mixture of hot air and steam circulating in this chamber at a pressure which is as far as possible constant and greater than the ambient atmospheric pressure.

5. Heat exchanger according to Claim 4, characterized in that, in order to obtain a sufficient rise in temperature of the fluid to be heated up and the maximum condensation of the steam carried by the air in order to enable the recycling of this air, it has at least two circuits of fluid to be heated up which are superposed in the exchange chamber, enabling differing temperatures of heated-up fluid to be obtained at their outlet, the highest being close to that of the compressed steam in the exchange chamber.

6. Heat exchanger according to either of Claims 4 or 5, characterized in that the maintaining under pressure of the mixture of air and steam inside the chamber is obtained by winding the tube or tubes (12) in the form of coils in successive parallel layers, the free surface area at each layer between the enclosure (7), the column (8) and the tube forming the coil of each layer being less than the surface area of the cross-section of the admission conduit (5a).

7. Heat exchanger according to one of Claims 4 to 6, characterized in that, in order to ensure the slow but continuous run-off of the condensates inside the central column (8), despite the high upward speed of the hot mixture of air and steam in the exchange chamber, the successive layers of tube coils are inscribed within a conical volume with its largest diameter at the upper part of each layer of coils, the central coil (10) of each layer being coiled tangentially to the central column (8) which has the perforations (9) immediately above the tangent defined above so as to enable the condensates, which slowly descend by means of gravity each stage of coils as far as the central coil (10), to penetrate into the central column for the removal of the condensates (8) through the perforations (9), the angle formed by the cone described by each layer of coils with a plane perpendicular to the central column being determined by the desired run-off speed for the condensates.

8. Heat exchanger according to one of Claims 4 to 7, characterized in that, in order to obtain a maintaining of the overpressure over the entire height of the exchange chamber, the surface area for the passage of the air/stream mixture between each stage of coils decreases slightly from the bottom to the top of the stages of coils so as to compensate at each stage the loss of volume of the mixture of air and steam by progressive condensation of the steam.

9. Heat exchanger according to one of Claims 4 to 8, characterized in that it has, downstream, an air outlet conduit comprising at least one flap (15) enabling the optional regulation of the flow rate of air and of the overpressure in the mixture of air and steam in the enclosure of the said exchanger.

FIG.1

EP 0 233 826 B1

A

A

37

8

FIG.2

8

Pente des
étages
de spires

37

FIG.3

FIG.4

Pente des spires

FIG.5

FIG.6

EP 0 233 826 B1